## Europäisches Patentamt
## European Patent Office
## Office européen des brevets

(19)

(11) Veröffentlichungsnummer: **0 046 484**
**B1**

(12)

# EUROPÄISCHE PATENTSCHRIFT

(45) Veröffentlichungstag der Patentschrift:
27.04.88

(51) Int. Cl.⁴: **B 62 D 47/02,** B 62 D 53/00

(21) Anmeldenummer: **81104302.5**

(22) Anmeldetag: **04.06.81**

(54) Gelenkfahrzeug mit mehreren Achsen.

(30) Priorität: 23.06.80 DE 3031862

(43) Veröffentlichungstag der Anmeldung:
03.03.82 Patentblatt 82/9

(45) Bekanntmachung des Hinweises auf die Patenterteilung:
27.04.88 Patentblatt 88/17

(84) Benannte Vertragsstaaten:
AT BE CH DE FR GB IT LI LU NL SE

(56) Entgegenhaltungen:
DE-A-2 547 487
DE-A-2 748 713
DE-A-2 810 651
DE-B-2 420 203
GB-A-1 307 061

(73) Patentinhaber: Hymer- Leichtmetallbau, Postfach
138, D-7988 Wangen/Allgäu- Käferhofen (DE)

(72) Erfinder: Gier, Kurt, Heiningerweg 8, D-7150
Backnang (DE)

(74) Vertreter: Wilhelm, Hans- Herbert, Dr.- Ing.,
Wilhelm & Dauster Patentanwälte
Hospitalstrasse 8, D-7000 Stuttgart 1 (DE)

EP 0 046 484 B1

## Beschreibung

Die Erfindung betrifft ein Gelenkfahrzeug mit mehreren Achsen, das einen Primär- und einen Sekundärwagen aufweist, bei dem über einen insbesondere dem Sekundärwagen zugeordneten Antriebsmotor zumindestens die Achse des Sekundärwagens angetrieben ist und bei dem der Sekundärwagen über eine Gelenkverbindung mit dem Primärwagen verbunden ist, wobei zur Lenkung des Fahrzeuges die Vorderachse des Primärwagens vorgesehen ist und an der Gelenkverbindung eine Gelenkbremse wirkt.

Gelenkfahrzeuge dieser Bauart sind bekannt (DE-B 24 20 203). Bei solchen Bauarten erfolgt der Schub des Gesamtfahrzeuges von dem mit dem Antrieb versehenen und als Nachläufer ausgebildeten Sekundärwagen aus. Um das Einknicken des Gelenkfahrzeuges zu verhindern, wird dort vorgesehen, zunächst über eine gesonderte Einrichtung dem jeweiligen Lenkwinkel einen maximal zulässigen Knickwinkel zuzuordnen, diesen Knickwinkel dann zum Vergleich mit dem tatsächlichen Knickwinkel heranzuziehen und in Abhängigkeit von diesem Vergleichsergebnis eine Gelenksperre der Knickwinkelvergrößerung einseitig entgegenwirken zu lassen. Bei den bekannten Bauarten wird dabei davon ausgegangen, daß ausschließlich eine solche Gelenksperre zu einer Fahrzeugsicherung führen kann und daß der sich im Gelenk einstellende Winkel bei regulärem Fahrverhalten mit einer bestimmten zeitlichen Verzögerung dem durch die gelenkten Räder vorgegebenen Lenkwinkel folgt. Für das reguläre Fahrverhalten läßt sich damit also jedem Lenkwinkel ein bestimmter maximaler Knickwinkel zuordnen. Wird dieser überschritten, so wird das Gelenk blockiert.

Diese Bauart weist den Nachteil auf daß aufwendige Meßeinrichtungen für Lenk- und Knickwinkel notwendig sind und daß auch ein Rechner und eine Elektronikeinrichtung vorgesehen sein müssen, die selbst wieder Quelle für Fehler sein können und die den Herstellungsaufwand solcher Fahrzeuge erhöhen. Nachteile können sich auch beim Ein- oder Ausparken solcher Gelenkfahrzeuge ergeben und es kann, da die Gelenkblockierung erst mit einer gewissen Zeitverzögerung erfolgt , bei bestimmten Fahrbahnverhältnisse, beispielsweise bei glatter Fahrbahn, das bereits eingetretene seitliche Abrutschen nicht mehr voll verhindert werden.

Bekannt ist es auch (DE-A 27 48 713), den Knickwinkel für Gelenkfahrzeuge der eingangs genannten Art dadurch zu beeinflussen, daß zwischen Primär- und Sekundärwagen Dämpfzylinder angeordnet sind, die unter einer bestimmten Vorspannung stehen und stabilisierend auf das Fahrverhalten wirken können. Die von diesen Dämpfzylindern ausgeübten Kräfte wirken aber im wesentlichen in derselben Richtung wie die Schubkräfte. Sie können nicht verhindern, daß der Sekundärwagen gegenüber dem Primärwagen bei Kurvenfahrten Schlingerbewegungen ausführt. Der Erfindung liegt die Aufgabe zugrunde, ein Gelenkfahrzeug der eingangs genannten Art, insbesondere einen Gelenkomnibus so zuzustalten, daß es auch auf nasser oder glatter Fahrbahn, selbst bei starker Kurvenlage, sicher gesteuert werden kann, ohne daß ein Ausbrechen des Fahrzeuges oder ein Abknicken zwischen dem Sekundär- oder dem Primärwagen befürchtet zu werden braucht. Die Erfindung besteht bei einem Gelenkfahrzeug der eingangs genannten Art darin, daß die Gelenkbremse ausschließlich in Abhängigkeit vom Knickwinkel zwischen Primär- und Sekundärwagen auf die Gelenkverbindung wirkt und daß ihre Bremskraft mit größer werdendem Knickwinkel erhöht wird. Mit einer solchen Gelenkbremse kann daher erreicht werden, daß je nach Knickwinkel der weiteren Drehbewegung des Gelenkes zu größeren Knickwinkeln hin auch immer größer werdende Kräfte entgegengesetzt werden. Bei einem maximalen Knickwinkel, der vorher bestimmt werden kann, kann die Gelenkbremse ihre maximale Bremskraft entfalten und erst dann als Gelenksperre wirken. Bei Geradeausfahrt dagegen ist die Gelenkbremse wirkungslos und steigert ihre Bremskraft in dem Maße, in dem der Knickwinkel bei Kurvenfahrt vergrößert wird.

Die Gelenkbremse kann in einfacher Weise als eine druckmittelbetätigte Reibungsbremse ausgebildet sein.

Gelenkfahrzeuge der eingangs genannten Art sind üblicherweise mit Druckluftaggregaten ausgestattet, die zum Betätigen der Gelenkbremse eingesetzt werden können. Zusätzliche Hilfsenergien sind nicht nötig.

Zur Knickwinkel-abhängigen Steuerung können in einfacher Weise Schalter vorgesehen sein, die dem Primär- oder Sekundärwagen fest zugeordnet sind und die von einer dem anderen Wagen zugeordneten Stufensteuerscheibe betätigbar sind, welche die Druckluftzufuhr zur Gelenkbremse über Magnetventile steuert. Eine solche Stufenschaltung wird in den meisten Fällen ausreichen, die Bremswirkung innerhalb der durch den Stufenschalter definierten Winkelbereiche konstant auftreten zu lassen. Es kann aber auch günstig sein, die winkelabhängige Regelung stufenlos elektrisch über Potentiometer zu bewirken, wobei dann auch zum Beispiel bei Erreichen des maximalen Knickwinkels ein Warnsignal für den Fahrer ausgelöst werden kann oder zum Beispiel bei Automatikgetrieben oder bei Rückwärtsfahrt, eine selbstätige Umschaltung in den Leerlauf erfolgen kann. Eine Überbelastung des Fahrgestelles kann so vermieden werden.

Weiterhin ist es vorteilhaft, wenn beim Erreichen des konstruktiv bedingten, maximalen Knickwinkels sowohl die Betriebs- als auch die Gelenkbremse über die Schalter beaufschlagt werden. Es kann dann kein größerer als der maximale Knickwinkel auftreten, da das Fahrzeug in diesem Falle sofort abgebremst wird. Zusätzlich zu der die Änderung des Knickwinkels hemmenden Bremswirkung können in vorteilhafter Weise der Gelenkbremse auch noch Lenkstoßdämpfer zwischen Primär- und Sekundärfahrzeug zugeordnet sein, die sich jeweils an den gegenüberliegenden Fahrzeugenden abstützen und unter einem Winkel zur Längsachse des Fahrzeuges angeordnet sind. Diese Lenkstoßdämpfer haben den Vorteil, daß sie eine Schlingerbewegung des Sekundärwagens in Geradeausfahrt dämpfen können. Gleichzeitig kann dadurch die Gelenkbremse auch so gesteuert werden, daß sie bei kleinen auftretenden Knickwinkel, wie sie zum Beispiel bei Schlingerbewegungen hervorgerufen werden, nicht anspricht.

In der Zeichnung sind Ausführungsbeispiele eines Gelenkfahrzeuges gemäß der Erfindung dargestellt, die im folgenden erläutert werden.

Es zeigen:

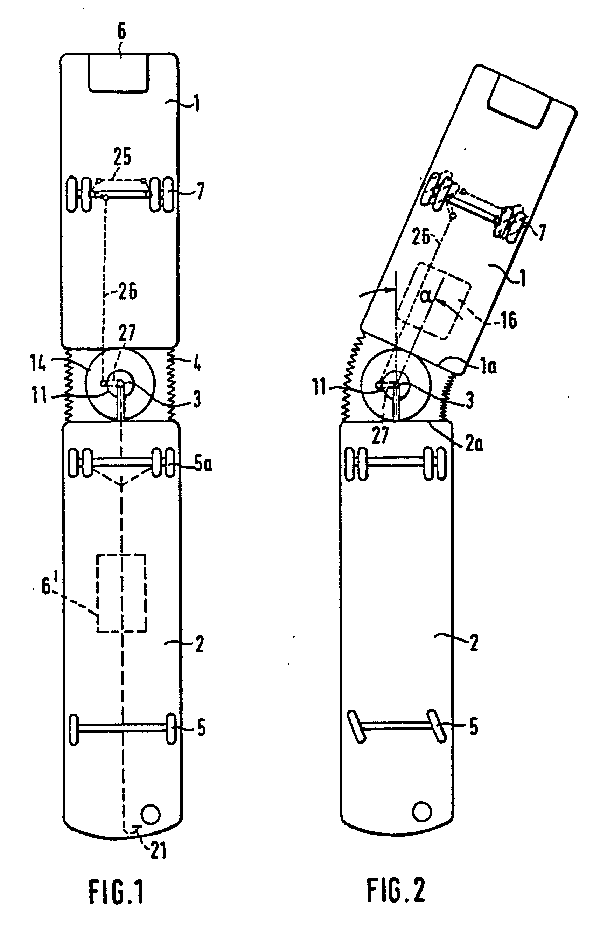

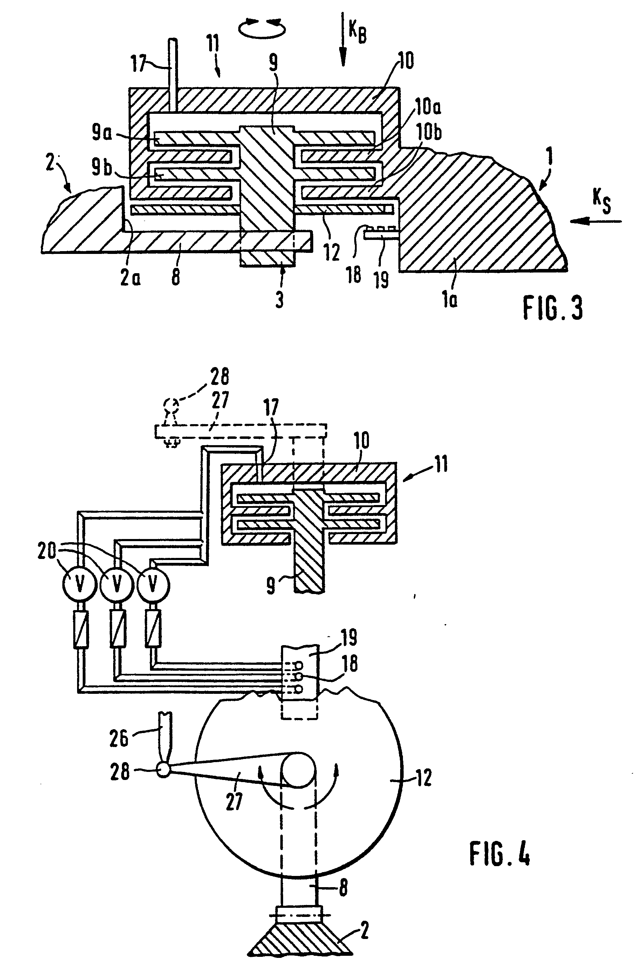

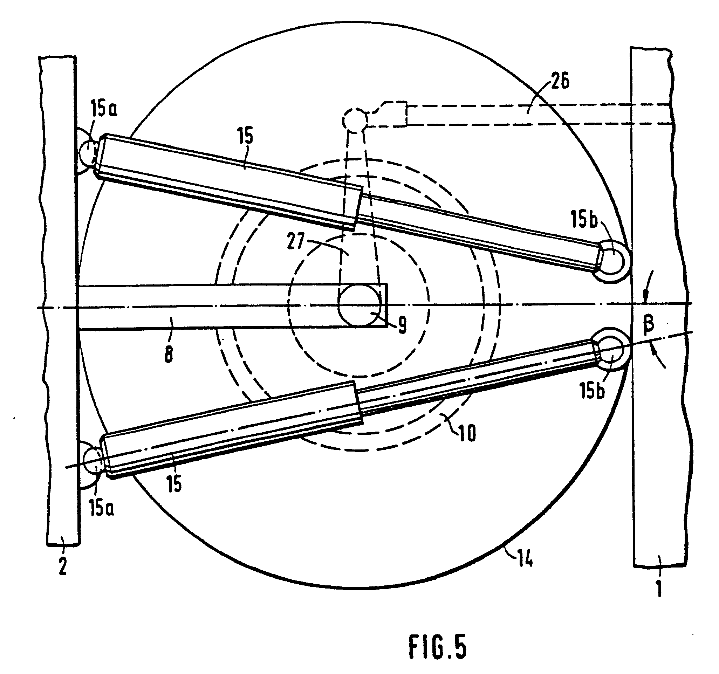

Figur 1 eine schematische Darstellung eines mehrachsigen Gelenkomnibusses in Geradeausfahrt, Figur 2 eine schematische Darstellung eines mehrachsigen Gelenkomnibusses in Kurvenfahrt, Figur 3 eine schematische Darstellung einer erfindungsgemäß angeordneten Gelenkbremse, Figur 4 eine schematische Darstellung eines Steuerschalters und Figur 5 eine schematische Darstellung der Gelenkverbindung mit Lenkstoßdämpfern.

In der Fig. 1 ist ein Gelenkomnibus dargestellt, bei welchem mit 1 ein Sekundärwagen bezeichnet ist und mit 2 ein Primärwagen, die über eine Gelenkverbindung 3 miteinander in Verbindung stehen. In dem gezeigten Beispiel trägt der Sekundärwagen 1 das Antriebsaggregat 6 und kann vom Primärwagen aus über die lenkbare Achse 5 gesteuert werden. Die beiden Wagen sind über Faltenbälge im Bereich der Gelenkverbindung seitlich miteinander verbunden, wie dies bei Gelenkomnibussen z. B. der Fall ist. Weiterhin ist ein solcher Gelenkzug üblicherweise mit einer Betriebsbremse 21 ausgestattet, die in der Fig. 1 nur schematisch für die Achse 5a gezeigt ist. Es ist vorgesehen, daß eine solche Betriebsbremse 21 mit der im Bereich der Gelenkverbindung 3 angeordneten Gelenkbremse 11 so zusammenwirkt, daß diese voll beaufschlagt wird, wenn die Betriebsbremse 21 betätigt wird. Es ist auch möglich, das Antriebsaggregat als Mittelmotor 6' zum Antrieb der Achse 5a vorzusehen. Die Belastung im Bereich der Gelenkverbindung 3 wird aber bei Anordnung des Antriebsaggregates 6 im Sekundärwagen geringer.

In der Fig. 2 ist ein solches Gelenkfahrzeug in Kurvenfahrt schematisch dargestellt. Dabei bilden der Sekundärwagen 1 und der Primärwagen 2 einen Knickwinkel $\alpha$ miteinander, der in Abhängigkeit des Lenkausschlages der Steuerräder 5 sich einstellt. In dieser Fahrtstellung treten am Primärwagen 2 Schubkräfte auf, die vom Sekundärwagen 1 herrühren und entsprechend einem Kräfteparallelogramm nicht vollständig in Richtung der Längsachse des Primärwagens 2 wirken. Diese Tatsache ist für die problematische Kurvenlage solcher Gelenkfahrzeuge verantwortlich und kann dazu führen, daß auf nasser oder glatter Fahrbahn der Sekundärwagen gegenüber dem Primärwagen abknickt. Um dies zu verhindern, sind bei bekannten Bauarten zwischen den sich gegenüberliegenden Enden 1a und 2a der beiden Wagen Stoßdämpfer so angebracht, daß sie entlang der auftretenden Kraftkomponenten wirken. Dadurch müssen von solchen Stoßdämpfern die vollen Schubkräfte aufgenommen werden, die dann auf das Fahrgestell und auf den Aufbau weitergeleitet werden, wodurch diese Teile sehr beansprucht werden.

Um dies zu verhindern, ist es erfindungsgemäß vorgesehen, in der Gelenkverbindung 3 eine Gelenkbremse 11 vorzusehen, die in Fig. 1 und 2 angedeutet und schematisch dargestellt aus der Fig. 3 zu ersehen ist und z. B. in der Art einer druckmittelbetätigten Scheiben- oder Lamellenbremse ausgebildet ist. Die Gelenkverbindung wird dabei zwischen den beiden sich gegenüberliegenden Enden 1a und 2a der beiden Wagen 1 und 2 so hergestellt, daß ein Befestigungsarm 8, der an dem Primärwagen 2 befestigt ist, mit einem Achsbolzen 9 drehfest verbunden ist, an welchem Bremsscheiben 9a und 9b vorgesehen sein können. Diese Bremsschreiben können mit an einem Bremsgehäuse 10 vorgesehenen Bremsflächen 10a und 10b zusammenwirken, wobei das Bremsgehäuse 10 und die Bremsflächen 10a und 10b fest mit dem anderen Wagen, hier also mit dem Sekundärwagen 1, in Verbindung stehen. Die Gelenkbremse kann z. B. eine druckluftbetätigte Reibungsbremse sein, die über eine Druckluftleitung 17 von einem der beiden Wagen, der auch das sich üblicherweise an solchen Gelenkfahrzeugen befindende Druckluftaggregat trägt, in nicht näher dargestellter Weise beaufschlagt werden. Die dadurch hervorgerufenen Bremskräfte $K_B$ wirken mit einer solchen Gelenkbremse senkrecht zu den von einem Wagen auf den anderen übertragenen Schubkräften $K_S$. Die Einhaltung eines bestimmten Knickwinkels kann von der Gelenkbremse 11 dann mit wesentlich geringeren Kräften besorgt werden, wobei die Gelenkbremse so angesteuert werden kann, daß sie eine immer größer werdende Bremskraft mit zunehmenden Knickwinkeln entfaltet. Die auftretenden Schubkräfte des Sekundärwagens 1 können somit keine Blockierkräfte mehr hervorrufen, die auf das Fahrgestell und den Aufbau negative Einflüsse haben könnten.

Wie in den Fig 1 und 2 und in den Fig. 4 und 5 gestrichelt gezeigt ist, kann der Achsbolzen 9, der im Ausführungsbeispiel mit der Gelenkachse zusammenfällt, auch dazu ausgenützt werden, um die Zwangslenkung einer - oder mehrerer - Achse 7 des Sekundärwagens zu bewirken. Mit größer werdender Gesamtlänge des Gelenkomnibusses nämlich wird es im Hinblick auf die Einhaltung gewisser vorgeschriebener Kurvenradien notwendig, neben der Achse 5 des Primärwagens 2 auch die Achse 7 des Sekundärwagens 1 mitzulenken, was in üblicher Art über eine lenkbare Anordnung der Räder der Achse 7 und über eine diesen zugeordnete Spurstange 25 sowie eine zum Primärwagen 2 führende Lenkstange 26 geschieht. Die Lenkstange 26 kann nun in sehr einfacher Weise an einem Betätigungsarm 27 angelenkt sein, der drehfest mit dem Achsbolzen 9 verbunden ist. Da dieser Achsbolzen 9 fest mit dem Primärwagen 2 über den Befestigungsarm 8 in Verbindung steht, werden die Räder der Achse 7 bei Kurvenfahrt (Fig. 2) zwangsläufig mitgelenkt. Platzschwierigkeiten bei der Unterbringung der Anlenkung der Lenkstange 26 am Primärwagen treten nicht auf, obwohl im Bereich der Gelenkverbindung 3 die Gelenkbremse 11 und, wie noch erläutert werden wird, eine Steuereinrichtung für die Gelenkbremse 11 und Stoßdämpfer 15 angeordnet sind.

Aus den Fig. 4 und 5 geht hervor, daß der Achsbolzen 9 das Bremsgehäuse 10 möglichst abgedichtet nach oben durchdringt und an diesem, seinem von dem Befestigungsarm 8 abgewandten Ende fest mit dem Betätigungsarm 27 versehen ist, der einen Kugelgelenkzapfen 28 zur Anlenkung der Lenkstange 26 tragen kann.

Die Steuerung der Bremskraft in Abhängigkeit des Knickwinkels α läßt sich recht einfach über eine z. B. im Bereich eines das Gelenk zwischen Primärwagen 2 und Sekundärwagen 1 bildenden Drehkranzes 14 angeordnete und in Fig. 4 prinzipiell gezeigten Stufenscheibe 12 erreichen, die fest mit einem der beiden Wagen, z. B. dem Primärwagen 2, über den fest an diesem angeordneten Achsbolzen 9 verbunden ist. Mit dieser Stufenscheibe können in einfacher Weise dann knickwinkelabhängig Schalter 18 betätigt werden, die sich auf einer Halterung 19, welche ihrerseits fest mit dem anderen Wagen, also in dem Fall dem Sekundärwagen 1, in nicht näher gezeigter Weise verbunden ist. Die von den Schaltern 18 ausgehenden Signale können dann auf bekannte Magnetventile 20 gegeben werden, die die Druckluftzufuhr über die Zufuhrleitung 17 in die Gelenkbremse 11 entsprechend regeln kann. Die Steuerung erfolgt dabei so, daß die Gelenkbremse in Geradeausfahrt wirkungslos wird und ihre Bremskraft mit größer werdenden Knickwinkeln erhöht, indem die Stufenscheibe durch die von der Drehbewegung in eine der Pfeilrichtungen hervorgerufene Schaltung der Schalter 18 eines und mit größer werdenden Winkel mehrere Magnetventile 20 öffnet, so daß bei maximaler Bremskraft die Summe der über die einzelnen Ventile geleiteten Drucke in der Druckluftleitung 17 vorliegen und die Bremse beaufschlagen. Bei einem maximal vorgebbaren Knickwinkel kann die Gelenkbremse dann ihre maximale Bremskraft entfaltet haben, wodurch ein weiteres Abknicken und damit ein Vergrößern des Knickwinkels α zwischen den beiden Wagen 1 und 2 nicht mehr stattfinden kann. Dabei erfolgt dieses Blockieren so, daß der Sekundärwagen 1 sich nicht mehr mechanisch über in diesem Fall unter maximaler Spannung stehenden Stoßdämpfern am Primärwagen 2 abstützt, sondern eine weitere Drehbewegung im Gelenk 3 selbst verhindert wird.

Um die Steuerung einfacher zu machen, kann die Gelenkbremse in einem bestimmten, kleinen Winkelbereich ausgeschaltet bleiben. Die dann bei Geradeausfahrt auftretenden Schlingerbewegungen des Sekundärwagens 1 gegenüber dem Primärwagen 2 können in einfacher Weise über zwei Lenkstoßdämpfer 15 aufgefangen werden, deren Anordnung im Bereich des Drehkranzes 14 in Fig. 5 noch schematisch gezeigt ist. Sie können z. B. über der Gelenkbremse 11 so angeordnet sein, daß sie sich mit einem Ende 15a an einem Wagen, z. B. 2, abstützen und mit dem anderen Ende 15b am Wagen 1. Die Anordnung der Stoßdämpfer 15 kann dabei so erfolgen, daß sie mit der Verbindungsachse der beiden Wagenhälften 1 und 2 einen Winkel β bilden. Mit größer werdendem Knickwinkel werden dann immer mehr die Dämpferfunktionen von der Gelenkbremse 11 übernommen. Es ist auch vorteilhaft, wenn bei hohen Fahrgeschwindigkeiten ein Teilbremsdruck in der Gelenkbremse 11 erzeugt wird, der zur Stabilisierung bei Geradeausfahrt entscheidend beiträgt.

Bei Erreichen des maximalen Knickwinkels kann die Steuerung über den Schalter 18 so ausgeführt werden, daß gleichzeitig auch die Betriebsbremse 21 mit beaufschlagt wird. Somit wird es unmöglich gemacht, daß dieser maximale Knickwinkel α überschritten wird, wodurch die Karosserie sowohl des Primär- als auch des Sekundärwagens beschädigt werden würde.

Eine Verbesserung der Kurvenlage kann noch dadurch erzielt werden, wenn der Tank 16, wie dies in Fig. 2 schematisch dargestellt ist, zwischen der Hinterachse des Sekundärwagens 1 und dem Gelenk 3 so nahe wie möglich am Gelenk 3 angebracht ist.

Durch die Gelenkbremse wird die Kurvenfahrttauglichkeit von Gelenkfahrzeugen auch auf nasser und glatter Fahrbahn erheblich erhöht. Selbstverständlich kann eine erfindungsgemäß arbeitende Gelenkbremse auch in Gelenken anderer Fahrzeuge, die miteinander über ein Gelenk in Verbindung stehen, vorteilhaft angewendet werden. Mit einer Beaufschlagung der Gelenkbremse über die Betriebsbremse kann weiterhin ein Ausbrechen des Sekundärwagens gegenüber dem Primärwagen sowohl in Geradeausfahrt als auch in Kurvenfahrt wirkungsvoll verhindert werden.

## Patentansprüche

1. Gelenkfahrzeug mit mehreren Achsen, das einen Primär- und einen Sekundärwagen aufweist, bei dem über einen, insbesondere dem Sekundärwagen zugeordneten Antriebsmotor zumindest die Achse des Sekundärwagens angetrieben ist und bei dem der Sekundärwagen über eine Gelenkverbindung mit dem Primärwagen verbunden ist, wobei zur Lenkung des Fahrzeuges die Vorderachse des Primärwagens vorgesehen ist und an der Gelenkverbindung eine Gelenkbremse wirkt, dadurch gekennzeichnet, daß die Gelenkbremse (11) ausschließlich in Abhängigkeit vom Knickwinkel ($\alpha$) zwischen Primär- (2) und Sekundärwagen (1) auf die Gelenkverbindung (3) wirkt und daß ihre Bremskraft mit größer werdendem Knickwinkel ($\alpha$) erhöht wird.

2. Gelenkfahrzeug nach Anspruch 1, dadurch gekennzeichnet, daß die Gelenkbremse (11) eine druckmittelbetätigte Reibungsbremse ist.

3. Gelenkfahrzeug nach Anspruch 1 und 2, dadurch gekennzeichnet, daß zur knickwinkelabhängigen Steuerung Schalter (18) vorgesehen sind, die dem Primär- oder Sekundärwagen fest zugeordnet sind und von einer dem anderen Wagen zugeordneten Stufensteuerscheibe (12) betätigbar sind, welche die Druckluftzufuhr zur Gelenkbremse (11) über Magnetventile steuern.

4. Gelenkfahrzeug nach Anspruch 1 und 2, dadurch gekennzeichnet, daß die winkelabhängige Regelung stufenlos elektrisch über Potentiometer erfolgt.

5. Gelenkfahrzeug nach Anspruch 4, dadurch gekennzeichnet, daß die winkelabhängige Regelung über Drosselventile erfolgt.

6. Gelenkfahrzeug nach mindestens einem der Ansprüche 1 bis 5, dadurch gekennzeichnet, daß bei Erreichen des konstruktiv bedingten maximalen Knickwinkels ($\alpha$) sowohl die Betriebs- (21) als auch die Gelenkbremse (11) über die Schalter (18) beaufschlagt werden.

7. Gelenkfahrzeug nach mindestens einem der Ansprüche 1 bis 6, dadurch gekennzeichnet, daß der Gelenkbremse (11) Lenkstoßdämpfer (15) zwischen Primär- (2) und sekundärfahrzeug (1) zugeordnet sind, die sich jeweils an den gegenüberliegenden Fahrzeugenden (1a, 2a) abstützen und unter einem Winkel ($\beta$) zur Längsachse des Fahrzeuges angeordnet sind.

## Claims

1. Articulated vehicle having a plurality of axles and comprising a primary wagon and a secondary wagon and wherein at least the axle of the secondary wagon is driven via a driving engine associated particularly with the secondary wagon and wherein the secondary wagon is connected by an articulated joint to the primary wagon, the front axle of the primary wagon being provided for steering of the vehicle, the articulated joint being acted upon by an articulation brake, characterized in that the articulation brake (11) acts on the articulating joint (3) solely as a function of the angle of deflection ($\alpha$) between primary (2) and secondary (1) wagons and in that its braking force is increased as the angle of deflection ($\alpha$) becomes greater.

2. Articulated vehicle according to Claim 1, characterized in that the articulation brake (11) is a friction brake actuated by a pressurised medium.

3. Articulated vehicle according to Claim 1 and 2, characterized in that for control as a function of the angle of deflection, switches (18) are provided which are rigidly associated with the primary or secondary wagons and are adapted to be actuated by a stepped control disc (12) associated with the other wagon and in that the said switches control the supply of compressed air to the articulation brake (11) through magnetic valves.

4. Articulated vehicle according to Claim 1 and 2, characterized in that the angle-dependent control is stepless, being carried out electrically through potentiometers.

5. Articulated vehicle according to Claim 4, characterized in that the angle-dependent control takes place via throttle valves.

6. Articulated vehicle according to at least one of Claims 1 to 5, characterized in that when the structurally designed maximum angle of deflection ($\alpha$) is attained, both the operating brake (21) and also the articulation brake (11) are brought into operation via the switches (18).

7. Articulated vehicle according to at least one of Claims 1 to 6, characterized in that the articulation brake (11) has associated with it between primary (2) and secondary (1) vehicles steering shock absorbers (15) which are braced respectively on the opposite ends (1a, 2a) of the vehicle and which are at an angle ($\beta$) in relation to the longitudinal axis of the vehicle.

Three sheets of drawings

## Revendications

1. Véhicule articulé à plusieurs essieux comprenant un véhicule principal et un véhicule auxiliaire et dont un moteur de propulsion en particulier associé au véhicule auxiliaire, entraîne au moins l'essieu du véhicule auxiliaire et dans lequel le véhicule auxiliaire est relié au véhicule principal par une liaison articulée, l'essieu avant du véhicule principal assurant la direction du véhicule, et un frein d'articulation agissant sur la liaison articulée, caractérisé en ce que le frein d'articulation (11) agit exclusivement en fonction de l'angle de pliage ($\alpha$) entre le véhicule principal (2) et le véhicule auxiliaire (1) sur la liaison articulée (3) et en ce que sa force de freinage augmente en fonction de l'angle de pliage ($\alpha$).

2. Véhicule articulé selon la revendication 1, caractérisé en ce que le frein d'articulation (11) est un frein à friction actionné par un agent de pression.

3. Véhicule articulé selon la revendication 1 et 2, caractérisé en ce que des commutateurs (18) sont prévus pour assurer la commande en fonction de l'angle de pliage, commutateurs qui sont associés solidairement au véhicule principal ou au véhicule auxiliaire et sont mis en oeuvre par un disque de commande à gradins (12) associé à l'autre véhicule, disque qui commande l'alimentation en air comprimé du frein d'articulation (11) par l'intermédiaire d'électrovannes.

4. Véhicule articulé selon la revendication 1 et 2, caractérisé en ce que le réglage en fonction des angles se fait en continu, électriquement par l'intermédiaire de potentiomètres.

5. Véhicule articulé selon la revendication 4, caractérisé en ce que le réglage en fonction de l'angle se fait par l'intermédiaire de vannes d'étranglement.

6. ) Véhicule articulé selon au moins l'une des revendications 1 à 5, caractérisé en ce que lorsqu'on atteint l'angle de pliage ($\alpha$) maximum défini par construction, on actionne à la fois le frein de route (21) et le frein d'articulation (11) par l'intermédiaire des commutateurs (18).

7. Véhicule articulé selon au moins l'une des revendications 1 à 6, caractérisé en ce qu'au frein d'articulation (11) sont associés des amortisseurs de direction (15) entre le véhicule principal (2) et le véhicule auxiliaire (1), amortisseurs qui s'appuient respectivement contre les extrémités de véhicule opposées (1a, 2a) et sont disposés suivant un angle ($\beta$) par rapport à l'axe longitudinal du véhicule.

FIG.1

FIG.2

FIG. 3

FIG. 4

FIG.5